(19)

**Europäisches Patentamt**

**European Patent Office**

**Office européen des brevets**

(11)  **EP 4 118 807 B1**

(12)  **EUROPEAN PATENT SPECIFICATION**

(45)  Date of publication and mention
of the grant of the patent:
**24.04.2024  Bulletin 2024/17**

(21)  Application number: **21720311.6**

(22)  Date of filing: **11.03.2021**

(51)  International Patent Classification (IPC):
*H04L 41/0631* $^{(2022.01)}$     *H04L 41/5009* $^{(2022.01)}$

(52)  Cooperative Patent Classification (CPC):
**H04L 41/5009; H04L 41/0631**

(86)  International application number:
**PCT/IB2021/000146**

(87)  International publication number:
**WO 2022/189818 (15.09.2022 Gazette 2022/37)**

(54)  **APPARATUS AND METHODS FOR ANOMALY DETECTION**

VORRICHTUNG UND VERFAHREN ZUR ANOMALIEDETEKTION

APPAREIL ET PROCÉDÉS DE DÉTECTION D'ANOMALIE

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43)  Date of publication of application:
**18.01.2023  Bulletin 2023/03**

(73)  Proprietors:
• **HUAWEI TECHNOLOGIES CO., LTD.
Shenzhen Guangdong 518129 (CN)**
• **Institut Mines Telecom
91120 Palaiseau (FR)**

(72)  Inventors:
• **NAVARRO GONZALEZ, Jose Manuel
Shenzen, Guangdong, 518129 (CN)**

• **HUET, Alexis
Shenzen, Guangdong, 518129 (CN)**
• **ROSSI, Dario
Shenzen, Guangdong, 518129 (CN)**
• **PUTINA, Andrian
91120 Palaiseau (FR)**
• **SOZIO, Mauro
91120 Palaiseau (FR)**

(74)  Representative: **Roth, Sebastian
Mitscherlich PartmbB
Patent- und Rechtsanwälte
Karlstraße 7
80333 München (DE)**

(56)  References cited:
WO-A1-2020/014957      US-A1- 2020 364 607
US-A1- 2021 004 704      US-A1- 2021 037 037

**Description**

TECHNICAL FIELD

The present disclosure relates to devices and methods for performing anomaly detection in a network. In particular, the disclosure relates to a first apparatus for anomaly detection and a second apparatus for supporting anomaly detection in the network.

BACKGROUND

Network troubleshooting is important and challenging for communication service providers, such as Internet service providers, mobile network operators, cable television providers, etc. Anomaly detection plays a crucial role in network troubleshooting, and may be used for identifying novel attacks, misconfigurations, network failures, and the like. Since network outages are rare and diverse, unsupervised recommendations are widely used to determine a suitable algorithm for anomaly detection. Furthermore, a remote server may be used as an alternative to determining the suitable algorithm based on supervised recommendation. The recommendation herein refers to determining the suitable algorithm to perform the anomaly detection given a dataset. In particular, a core idea of the unsupervised recommendation is to determine the suitable algorithm based on a heuristic analysis performed purely on the dataset, whereas a core idea of the supervised recommendation is to determine the suitable algorithm based both on characteristics of the dataset itself and information collected from a historical data lake on other datasets.

US 2021/004 704 A1 discloses a system and a method for dynamic selection of anomaly detection options for particular metric data. For instance, a statistical model may be used to identify statistical outliers in a stream of time-series or metric data.

US 2021/037 037 A1 discloses a method for anomaly detection. For instance, a plurality of predictive models is generated for a first time series from the sequences of time series values. Each predictive model is to generate predicted values associated with the first time series using values of a second time series. For each of the plurality of predictive models, an error is determined between the corresponding predicted values and values associated with the first time series. A predictive model is selected for anomaly detection based on the determined error of the predictive model.

SUMMARY

Anomaly detection algorithms determined by the unsupervised recommendation are normally of good performance for detecting common anomalies. For challenging anomalies, or when the unsupervised recommendation fails to achieve a satisfactory algorithm, a supervised recommendation may be used to determine suitable anomaly detection algorithms by the remote server.

However, more and more stringent data security and privacy requirements place obstacles for performing the unsupervised recommendation locally and for performing the supervised recommendation remotely, as raw data may be prohibited to be transmitted to a third party without consent. Further, the supervised recommendation is used merely as an alternative to the unsupervised recommendation.

Moreover, algorithms determined by the supervised recommendation do not take account of client constraints. Therefore, the algorithms determined by the supervised recommendation may not be feasible to be deployed locally.

In view of the above-mentioned problems and disadvantages, embodiments of the present invention aim to improve anomaly detection in a network. An objective is to protect data privacy while ensuring a good performance of anomaly detection. One goal thereby is to improve the selection of one or more anomaly detection algorithms for performing the anomaly detection.

The objective is achieved by the embodiments of the invention as described in the enclosed independent claims. Advantageous implementations of the embodiments of the invention are further defined in the dependent claims.

A first aspect of the present disclosure provides a first apparatus for anomaly detection in the network. The first apparatus is configured to obtain a dataset and perform data aggregation on the dataset to obtain statistical information of the dataset. Then the first apparatus is configured to provide the statistical information of the dataset to a second apparatus. The first apparatus is further configured to obtain a set of anomaly detection algorithms, and then determine unsupervised advice based on the set of anomaly detection algorithms and based on at least one of the dataset and the statistical information of the dataset, wherein the unsupervised advice comprises one or more of the set of anomaly detection algorithms. Further, the first apparatus is configured to receive supervised advice from the second apparatus, wherein the supervised advice comprises one or more further anomaly detection algorithms, and the first apparatus is configured to merge the unsupervised advice with the supervised advice to obtain a final anomaly detection algorithm, wherein the final anomaly detection algorithm is based on the anomaly detection algorithms of the unsupervised advice and the supervised advice.

Notably, the first apparatus may be referred to as "client". The second apparatus may be referred to as "server". These terms may be used interchangeably throughout the present disclosure. In particular, the first apparatus may be a network device in the network and configured to perform anomaly detection, while the second apparatus may be a device outside the network and dedicated to providing an anomaly detection service to the first apparatus, for example, based on historical data.

Further, the dataset may be information that is collected in the network for the purpose of analysis. Optionally, the dataset may be a subset of such information.

Optionally, the first apparatus may be configured to provide information of the obtained set of anomaly detection algorithms to the second apparatus. In particular, the information of the obtained set of anomaly detection algorithms may comprise names or identifications based on a naming convention of the obtained anomaly detection algorithms.

Optionally, the first apparatus may further provide an identification of the obtained dataset to the second apparatus.

Further, the first apparatus may be configured to apply an unsupervised recommendation system or algorithm to obtain the unsupervised advice. To be specific, the unsupervised recommendation system or algorithm may be configured to recommend one or more suitable anomaly detection algorithms from the set of anomaly detection algorithms on the basis of the dataset, or the statistical information of the dataset, or a combination of both. Therefore, the unsupervised advice may be understood as an unsupervised recommendation result.

Similar to the unsupervised advice, the supervised advice may be obtained through a supervised recommendation system or algorithm applied by the second apparatus. The supervised advice may be understood as a supervised recommendation result.

In other words, the present disclosure proposes to merge results of an unsupervised recommendation that is performed locally, i.e., on the client, and of a supervised recommendation that is performed remotely, i.e., on the server. Furthermore, only the statistical information of the dataset is transmitted from the client to the server. Therefore, data security/privacy is assured.

Furthermore, by merging the results of unsupervised recommendation and supervised recommendation, the final anomaly detection may be more robust, more accurate, and more efficient in detecting anomalies. The first apparatus may thus ensure a good performance of the anomaly detection, while being able to protect data privacy.

In an implementation form of the first aspect, the dataset may comprise a set of key performance indicators (KPIs), of the network, and the statistical information of the dataset may comprise at least one of a mean value, a standard deviation, a skewness, and a kurtosis associated with each of the KPIs.

In an implementation form of the first aspect, the first apparatus may be configured to jitter the statistical information of the dataset by adding a noise when providing the statistical information of the dataset to the second apparatus.

In an implementation form of the first aspect, the first apparatus may be configured to apply each of the set of anomaly detection algorithm to exploit intrinsic properties of at least one of the dataset and the statistical information of the dataset, in order to determine the unsupervised advice.

In an implementation form of the first aspect, wherein the unsupervised advice may further comprise one or more first algorithm configurations, wherein the one or more first algorithm configurations may be associated with the one or more of the set of anomaly detection algorithms. Moreover, the supervised advice may further comprise one or more second algorithm configurations, wherein the one or more second algorithm configurations may be associated with the one or more further anomaly detection algorithms.

In an implementation form of the first aspect, wherein the unsupervised advice may further comprise one or more first weights, wherein the one or more first weights may be associated with the one or more of the set of anomaly detection algorithms. Moreover, the supervised advice may further comprise one or more second weights, wherein the one or more second weights may be associated with the one or more further anomaly detection algorithms.

The one or more first weights and the one or more second weights may be used to merge the one or more of the set of anomaly detection algorithms with the one or more further anomaly detection algorithms.

In an implementation form of the first aspect, the first apparatus may be further configured to assign each of the one or more first weights with a value based on the confidence of each of the one or more of the set of anomaly detection algorithms.

In an implementation form of the first aspect, the first apparatus may be further configured to assign each of the one or more first weights with a randomized value.

In an implementation form of the first aspect, the first apparatus may be further configured to assign each of the one or more first weights with a value based on time consumption of each of the one or more of the set of anomaly detection algorithms.

In an implementation form of the first aspect, the first apparatus may be further configured to assign each of the one or more first weights with an average value based on a quantity of the one or more of the set of anomaly detection algorithms.

In an implementation form of the first aspect, wherein for merging the unsupervised advice and the supervised advice, the first apparatus may be configured to:

merge the one or more of the set of anomaly detection algorithms with the one or more further anomaly detection algorithms based on the one or more first weights and the one or more second weights, respectively, to obtain the final anomaly detection algorithm.

Optionally, before merging the one or more of the set of anomaly detection algorithms with the one or more further anomaly detection algorithms, the first apparatus may be configured to normalize the one or more first weights and the one or more second weights.

A second aspect of the present disclosure provides a second apparatus for supporting anomaly detection in a network. The second apparatus is configured to obtain a further set of further anomaly detection algorithms and receive statistical information of a dataset from a first apparatus. Then, the second apparatus is configured to determine supervised advice based on the further set of further anomaly detection algorithms and based on the statistical information of the dataset. Further, the second apparatus is configured to provide the supervised advice comprising one or more of the further set of further anomaly detection algorithms to the first apparatus.

By providing the supervised advice to the first apparatus based on the statistical information received from the first apparatus, the second apparatus may support the selection of one or more anomaly detection algorithms at the first apparatus. Thus, anomaly detection can be improved.

In an implementation form of the second aspect, the second apparatus may be configured to determine the supervised advice further based on historical data regarding one or more anomalies in the network.

Optionally, the second apparatus may be configured to use machine learning-based approaches for the supervised recommendation method.

In an implementation form of the second aspect, wherein before determining the supervise advice, the second apparatus may be further configured to pre-process the statistical information of the dataset.

Optionally, for pre-processing the statistical information of the dataset, the second apparatus may be configured to apply operations or pre-processing algorithms that may be too costly and complex to be applied on the first apparatus.

A third aspect of the present disclosure provides a system for anomaly detection in a network. The system comprises a first apparatus according to the first aspect or any implementation form thereof, and a second apparatus according to the second aspect or any implementation form thereof.

A fourth aspect of the present disclosure provides a method performed by a first apparatus for anomaly detection in a network. The method comprises the following steps:

- obtaining a dataset and performing data aggregation on the dataset to obtain statistical information of the dataset;
- obtaining a set of anomaly detection algorithms;
- providing the statistical information of the dataset to a second apparatus;
- determining unsupervised advice based on the set of anomaly detection algorithms and based on at least one of the dataset and the statistical information of the dataset, wherein the unsupervised advice comprises one or more of the set of anomaly detection algorithms;
- receiving supervised advice from the second apparatus, wherein the supervised advice comprises one or more further anomaly detection algorithms, and
- merging the unsupervised advice with the supervised advice to obtain a final anomaly detection algorithm, wherein the final anomaly detection algorithm is based on the anomaly detection algorithms of the unsupervised advice and the supervised advice.

A fifth aspect of the present disclosure provides a method performed by a second apparatus for anomaly detection in a network. The method comprises the following steps:

- obtaining a further set of further anomaly detection algorithms;
- receiving statistical information of a dataset from a first apparatus;
- determining supervised advice based on the further set of further anomaly detection algorithms and based on the statistical information of the dataset; and
- providing the supervised advice comprising one or more of the further set of further anomaly detection algorithms to the first apparatus.

A sixth aspect of the present disclosure provides a computer program comprising a program code for performing the method according to the fourth aspect or the fifth aspect of the present disclosure.

It has to be noted that all devices, elements, units, and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity, which performs that specific step or functionality, it should be clear for a skilled person that these methods and functionalities can be implemented in respective software or hardware elements, or any kind of combination thereof.

BRIEF DESCRIPTION OF DRAWINGS

The above-described aspects and implementation forms will be explained in the following description of specific embodiments in relation to the enclosed drawings, in which

FIG. 1     shows an application scenario of the present disclosure;

FIG. 2     shows a diagram of a first apparatus according to an embodiment of the invention;

FIG. 3     shows a diagram of a second apparatus according to an embodiment of the invention;

FIG. 4     shows a diagram of a system according to an embodiment of the invention;

FIG. 5     shows a diagram of a method according to an embodiment of the invention;

FIG. 6     shows a diagram of a method according to an embodiment of the invention;

FIG. 7A    shows a performance result of an embodiment of the invention; and

FIG. 7B    shows a performance result of an embodiment of the invention.

DETAILED DESCRIPTION OF EMBODIMENTS

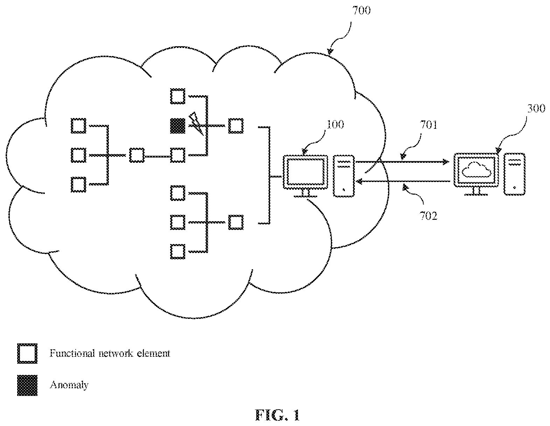

FIG. 1 shows an application scenario of the present disclosure. A first apparatus **100** is located inside a network **700**. The network **700** may be a communications network comprising a group of nodes interconnected by links. For example, the network **700** may be a wide area network (WAN), a metropolitan area network, a corporate network, a local area network (LAN), a television network, a satellite network, or a telecommunications network such as a public switched telephone network (PSTN), a cellular network. When one or more anomalies occur in the network **700,** the first apparatus **100** is configured to perform anomaly detection. Furthermore, a second apparatus **300** that is separate from, or not a part of, the network **700** is also used to support the first apparatus **100** for anomaly detection in the network. To this end, the first apparatus **100** is configured to provide information **701** to the second apparatus **300** for analyais. Then, the second apparatus **300** is configured to provide suggestion **702** to the first apparatus **100** for performing anomaly detection. For protecting data privay, the information **701** may not comprise unprocessed data or raw data of the network **700.** Instead, the information **701** may be statistical information of a dataset of the network **700.** Furthermore, it is noted that an anomaly may be a particular node of the network **700**, i.e., an anomalous node, such as a hardware failure, a misconfiguration of that particular node, or due to a malicious attack to that particular node. An anomaly may also be a particular link between nodes, i.e., an anomalous link, due to physical damage of the link, or a man-in-the-middle attack and the like. In some other cases, an anomaly may not be related to a specific node or a specific link but may be a cascading failure due to overload in the network **700**. Types of anomalies shall not be limited in the present disclosure.

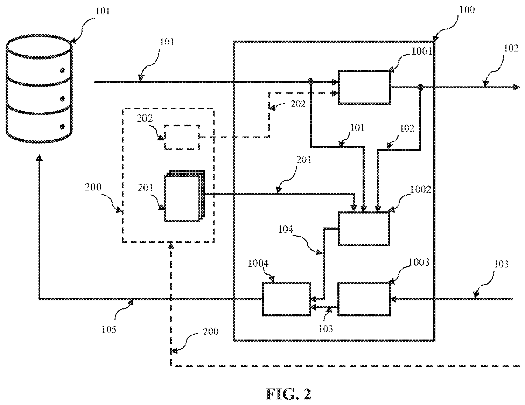

FIG. 2 shows a first apparatus **100** according to an embodiment of the invention.
The above description with respect to the first apparatus **100** according to the first aspect and its implementation forms is correspondingly valid for the first apparatus **100** of FIG. 2. It is noted that elements **1001, 1002, 1003,** and **1004** in FIG. 2 may be understood as being optional modules of the the first apparatus **100,** which may perform certain steps of processing information and do not form intergral parts of the first apparatus **100.**
In this embodiment, as a first step for performing anomaly detection, the first apparatus **100** is configured to obtain a dataset **101**. The dataset **101** may contain useful network information for anomaly detection such as traffic logs and diagnosis logs that may be collected and stored in the network. Optionally, the dataset **101** may comprise a set of KPIs of the network. It is noted that the dataset **101** may not be necessarily stored in the first apparatus **100**. That is, the dataset **101** may be stored in a further device of the network that is accessible to the first apparatus **100**.
Further, the first apparatus **100** is configured to perform data aggregation on the obtained dataset **101** to obtain statistical information **102** of the dataset **101**. Optionally, the statistical information **102** may comprise at least one of a mean value, a standard deviation, a skewness, and a kurtosis associated with each of the KPIs. One purpose of the data aggregation is to extract meaningful information from the dataset **101**. In some embodiments, for performing the data aggregation, the first apparatus may be configured to perform meta-feature extraction. That is, the first apparatus **100** may be configured to extract meta-features from the dataset **101**. The meta-features, also known as characterization measures, may be able to characterize the complexity of the dataset **101** and to provide estimates of algorithm performance. In some embodiments, the statistical information **102** may be the extracted meta-features of the dataset **101**. In some other embodiments, the statistical information **102** comprises at least one of a mean value, a standard deviation, a skewness, and a kurtosis associated with each of the KPIs.

Then, the first apparatus **100** is configured to provide the statistical information **102** to a second apparatus **300**. It is noted that the first apparatus **100** is configured not to provide the dataset **101** to the second apparatus **300**. In this way, data privacy of the network may be assured since detailed data remains within the network. To enhance data privacy of the network and to protect data security during transmission, the first apparatus **100** may be further configured to jitter the statistical information **102** by adding noise.

Optionally, the second apparatus **300** may provide acceptable statistical information **202** in advance to the first apparatus **100,** so that the first apparatus **100** may be configured to perform data aggregation accordingly. For example, the acceptable statistical information **202** may comprise one or more of the KPIs that are accepted by the second apparatus **300,** or a format of the statistical information required by the second apparatus **300,** or a combination of both. In this way, the first apparatus **100** may be configured to prepare the statistical information **102** in a more efficient manner.

Further, the first apparatus **100** is configured to obtain a set of anomaly detection algorithms **201**. The set of anomaly detection algorithms **201** may be understood as a pool of candidate algorithms for anomaly detection. Optionally, the set of anomaly detection algorithms **201** may be provided from the second apparatus **300**. Alternatively, the first apparatus **100** may be configured to acquire the set of anomaly detection algorithms **201** on its own such as from its own storage medium. For example, the set of anomaly detection algorithms **201** may include any two or more of the following:

- distance-based anomaly detection algorithms such as a Local Outlier Factor (LOF) algorithm, and a k-Nearest Neighbour (kNN) algorithm;
- tree-based anomaly detection algorithms such as an Isolation Forest algorithm, a robust random cut forest (RRCF) algorithm, a Half-Space Trees (HST) algorithm, a Partial Identification (PID) Forest algorithm, a Random Histogram Forest (RHF) algorithm;
- projection-based anomaly detection algorithms such as an xStream algorithm, a lightweight on-line detector of anomalies (LODA).

It is noted that the above list is non-exhaustive and does not exclude any other algorithms that may be used for anomaly detection.

In some embodiments, the first apparatus **100** may be configured to receive an application programming interface (API) **200** comprising at least one of the acceptable statistical information **202** and the set of anomaly detection algorithms **201** from the second apparatus **300**.

Moreover, the first apparatus **100** may be configured to select the second apparatus **300** from a pool of available servers based on business requirements and administrative policies.

Optionally, the first apparatus **100** may be configured to determine the set of anomaly detection algorithms **201** based on its capabilities or according to performance requirements of the anomaly detection, such as time constraint, resource consumption, and accuracy etc. For example, the first apparatus **100** may be configured to exclude algorithms that are time-consuming or of high-computational complexity.

Further, the first apparatus **100** is configured to determine **504** unsupervised advice **104** based on the set of anomaly detection algorithms **201**. In other words, the first apparatus **100** is configured to determine at least one first suitable anomaly detection algorithm from the set of anomaly detection algorithms **201**. Optionally, the first apparatus **100** may be configured to determine at least one first algorithm configuration associated with the at least one first suitable anomaly detection algorithm.

In particular, the first apparatus **100** may be configured to employ an unsupervised recommendation system or algorithm to determine the unsupervised advice **104**. The term "unsupervised" in the present disclosure may be understood that the unsupervised advice **104** is determined in a way of exploiting only intrinsic properties of the dataset **101**. That is, no predetermined bias may be involved to determine the unsupervised advice **104**. In particular, neither prior experience nor historical data for performing anomaly detection of any kind may be referenced to determine the unsupervised advice **104**. In other words, the at least one first suitable anomaly detection algorithm may be determined purely based on at least one of the dataset **101** and the statistical information **102** of the dataset **101**.

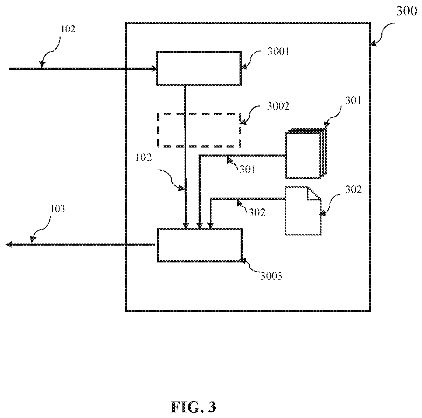

Further, the first apparatus **100** is configured to receive supervised advice **103** from the second apparatus **300**. The supervised advice **103** comprises one or more further anomaly detection algorithms, i.e., one or more second suitable anomaly detection algorithms determined by supervised recommendation. To this end, the second apparatus **300** may be configured to employ a supervised recommendation system or algorithm to determine the supervised advice **103**. The term "supervised" in the present disclosure may be understood that the supervised advice **103** is determined in a way of exploiting intrinsic properties of the dataset **101** with reference to predetermined bias, e.g., historical data. Aspects relating to the second apparatus **300** are described in the following with reference to FIG. 3.

In some embodiments, the supervised advice **103** may further comprise one or more second algorithm configurations associated with the one or more further anomaly detection algorithms.

Then, the first apparatus **100** is configured to merge the unsupervised advice **104** with the supervised advice **103** to obtain a final anomaly detection algorithm **105**. That is, the final anomaly detection algorithm **105** is based on the anomaly detection algorithms comprised in the unsupervised advice **104** and in the supervised advice **103**. Further, the first apparatus **100** may be configured to apply the final anomaly detection algorithm **105** to the dataset **101** for performing anomaly detection.

In some embodiments, the unsupervised advice **104** may further comprise one or more first weights associated with the one or more anomaly detection algorithms of the set of anomaly detection algorithms **201**; and the supervised advice **103** may further comprise one or more second weights associated with the one or more further anomaly detection algorithms.

It is noted that the one or more first weights and the one or more second weights may be applied when the final anomaly detection algorithm based on the anomaly detection algorithms of the unsupervised advice **104** and the supervised advice **103** is applied to the dataset for performing anomaly detection. That is, the first apparatus may be configured to perform weighting on outputs of the one or more anomaly detection algorithms of the set of anomaly detection algorithms **201** comprised in the unsupervised advice **104,** and the one or more further anomaly detection algorithms comprised in the supervised advice **103** based on the one or more first weights and the one or more second weights, respectively, in order to obtain weighted mean values of the outputs. An anomaly may be then determined as the sample with the highest ranking in the weighted mean values of the outputs. In some cases, more than one anomaly may be determined, if several samples with higher rankings in the weighted mean values of the outputs are distant to samples with lower rankings in the weighted mean values. Optionally, an anomaly threshold may be set, in order to identify one or more anomalies based on the weighted mean values of the outputs.

Optionally, the outputs of the one or more anomaly detection algorithms of the set of anomaly detection algorithms **201** and the outputs of the one or more further anomaly detection algorithms may be in a form of a vector. In this case, the one or more first weights and the one or more second weights may be used as coefficients applied to the vector, respectively.

Further, the one or more first weights may be assigned with values based on different criteria. In particular, one of the criteria may be the confidence of a corresponding anomaly detection algorithm. Further, the confidence is related to the performance of the corresponding anomaly detection algorithm under different scenarios. For example, performance, such as calculation speed and accuracy, of anomaly detection algorithms may vary with the number of instances (or samples) in the dataset **101** or the statistical information **102**.

For example, when the unsupervised advice **104** comprises an isolation forest (IF) algorithm and an RHF algorithm. Their weights may be determined based on the number of instances and kurtosis of the dataset **101**. For example, the weights of the IF algorithm and the RHF algorithm may be determined based on two parts.

The first part of the weights may be dependent upon the number of instances (or samples) in the dataset, and may be calculated as:

$$w_{IF\_1} = 2^{\left(-\frac{n_{dataset}}{n_{threshold}}\right)};$$

$$w_{RHF\_1} = 1 - w1_{IF\_1}$$

wherein $w_{IF\_1}$ and $w_{RHF\_1}$ denote the first part of the weights of the IF and RHF algorithms, respectively. $n_{dataset}$ denotes the number of instances comprised in the dataset. The $n_{threshold}$ denotes a pre-determined threshold for the number of instances. For example, if more weights need to be assigned to the IF algorithm for a dataset having less than 25600 instances, then $n_{threshold}$ = 25600. Notably, $n_{threshold}$ may be configurable and may be pre-determined at least before the first apparatus is configured to perform the step of determining the related weights. It is further noted that the number of instances in the dataset may be comprised in the statistical information **102**.

The second part of the weights may be dependent upon kurtosis, and may be calculated as: If kurtosis(pairwise distances) < kurtosis$_{threshold}$ = 7:

$$w_{IF\_2} = 0;$$

$$w_{RHF\_2} = 0;$$

else:

$$w_{IF\_2} = 0;$$

$$w_{RHF\_2} = 1 - \frac{kurtosis_{threshold}}{kurtosis(pairwise\ distances)};$$

wherein $w_{IF\_2}$ and $w_{RHF\_2}$ denote the second part of the weights of the IF and RHF algorithms, respectively; *kurtosis(pairwise distances)* denotes the kurtosis of the pairwise distances between kurtosis of features of the statistical information **102**. It is noted that the kurtosis$_{threshold}$ = 7 is given merely as an example. Other values for the kurtosis$_{threshold}$ may be used based on the statistical information **102.**

Then the final weights may be calculated as:

$$w_{IF} = w_{IF\_1} + w_{IF\_2}$$

$$w_{RHF} = w_{RHF\_1} + w_{IF\_2}$$

wherein $w_{IF}$ and $w_{RHF}$ denote the final weights of the IF and RHF algorithms, respectively.

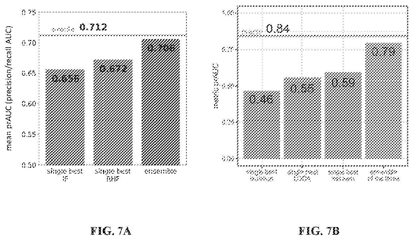

As shown in FIG. 7A, by using a mean precision/recall area under curve (prAUC) as a performance metric, an ensemble algorithm that merges IF with RHF according to their first weights respectively achieve a prAUC=0.706 (with pre-determined $n_{threshold}$ = 25600 and kurtosis$_{threshold}$ = 7), which is only 1% below an ideal boundary, i.e., an oracle boundary and at least 5% above a single algorithm. In this example, publicly available datasets such as KDD cup 1999 data, Arrhythmia data set, statlog (Shuttle) data set, UJI pen characters data set, abalone data set, Mulcross dataset, musk (version 2) data set, ionosphere data set, and spambase data set may be used as inputs to evaluate the performance of the ensemble algorithm. Moreover, a pool of candidate anomaly detection algorithms may be any two or more of the anomaly detection algorithms as mentioned with respect to FIG. 2, or of other anomaly detection algorithms known to the skilled person in the art.

Furthermore, in this example, recommendation algorithms based on ensemble of IF algorithm and RHF algorithm may be used whenever the IF algorithm and the RHF algorithm are in the pool of candidate anomaly detection algorithms. In other cases, other policies can be used, e.g. using the algorithm known to be the quickest, or using other ensemble predifined policies. It is noted that applications of the recommendation algorithms are not described in detail in the present application, as they may be implemented using the general knowledge of a person skilled in the art.

Alternatively, one of the criteria may be a time consumption of a corresponding anomaly detection algorithm.

Alternatively, one of the criteria may be an average value based on a quantity of the one or more of the set of anomaly detection algorithms **201**. That is, each first weight is equal to 1 divided by the number of the at least one first suitable anomaly detection algorithm comprised in the unsupervised advice **104.**

Alternatively, each of the one or more first weights may be a random value with the sum of 1.

Accordingly, in some embodiments, the first apparatus **100** may be configured to merge the one or more of the set of anomaly detection algorithms **201** with the one or more further anomaly detection algorithms based on the one or more first weights and the one or more second weights, respectively.

Optionally, the first apparatus **100** may be configured to perform normalization of the one or more first weights and the one or more second weights before the merging.

FIG. 3 shows a second apparatus **300** for supporting anomaly detection according to an embodiment of the invention. It is noted that elements **3001, 3002, 3003** in FIG. 3 may be understood as being optional modules of the the second apparatus **300,** which may perform certain steps of processing information and do not form intergral parts of the second apparatus **300.**

The above description with respect to the second apparatus **300** according to the second aspect and its implementation forms is correspondingly valid for the second apparatus **300 300** of FIG. 3. In FIG. 1-3, elements with the same reference signs share the same features and functions likewise.

In this embodiment, the second apparatus **300** is configured to obtain a further set of further anomaly detection algorithms **301**. It is noted that the further set of further anomaly detection algorithms **301** may be the same as the set of anomaly detection algorithms **201** that is obtained by the first apparatus **100**. In this case, the second apparatus **300** may be configured to optionally transmit this further set of further anomaly detection algorithms as a part of the API **200** to the first apparatus **100** in advance, i.e., before the first apparatus **100** starts anomaly detection. Optionally, the second apparatus **300** may be further configured to transmit the acceptable statistical information **202** as a part of the API **200** to the first apparatus **100** in advance as well.

Alternatively, the further set of further anomaly detection algorithms **301** may be a different set than the set of anomaly detection algorithms **201** that is obtained by the first apparatus **100**. In this case, the second apparatus **300** and the first apparatus **100** may have independent pools of candidate algorithms, respectively.

Optionally, the further set of further anomaly detection algorithms **301** may be a superset of the set of anomaly detection algorithm obtained by the first apparatus.

Then, the second apparatus **300** is configured to receive the statistical information **102** of the dataset **101** from the first apparatus **100**.

Then, the second apparatus **300** is configured to determine the supervised advice **103** based on the further set of further anomaly detection algorithms **301** and based on the statistical information **102**. The supervised advice **103** comprises one or more of the further set of further anomaly detection algorithms **301**.

Then, the second apparatus **300** is configured to provide the supervised advice **103** to the first apparatus **100**.

In some embodiments, the second apparatus **300** may be configured to determine the supervised advice **103** further based on the historical data **302** regarding one or more anomalies in the network.

As explained with reference to the first apparatus **100** in FIG. 2, the term "supervised" in the present disclosure may be understood that the supervised advice **103** is determined by the second apparatus **300** in a way of exploiting intrinsic properties of the dataset **101** in combination with predetermined biases, which may be historical data **302** in the present disclosure.

Moreover, the second apparatus **300** may optionally be configured to store the supervised advice **103** and the statistical information **102** as part of the historical data **302** for futher use.

Optionally, after receiving the statistical information **102** of the dataset **101,** the second apparatus **300** may be configured to pre-process the statistical information **102,** for example, through a pre-processing module **3002**. Optionally, for pre-processing **303** the statistical information **102,** the second apparatus **300** may be configured to apply operations or pre-processing algorithms that may be too costly and too complex to be applied on the first apparatus **100**. For example, the second apparatus **300** may be configured to perform data cleansing on the statistical information **102**. This data cleansing might also be needed if the first apparatus **100** is optionally configured to add noise in the statistical information **102.**

Further, the second apparatus **300** may be configured to compute a histogram moments for the statistical information **102** by performing a method-of-moments estimation. Moreover, the second apparatus **300** may be further configured to compute joint distribution between any two parameters of the statistical information **102.**

In this way, since certain types of anomalies tend to have a skewed distribution, the statistical information **102** may be optimized through pre-processing **303** as a basis for the second apparatus **300** to perform supervised recommendation. Furthermore, the historical data **302** may be directly compared with the pre-processed statistical information **102**. For example, if the historical data **302** and the statistical information **102** are analyzed and organized in a same manner, the second apparatus **300** may be configured to compare the statistical information **102** and the historical data **302.**

In some embodiments, the supervised advice **103** may further comprise one or more second algorithm configurations associated with the one or more of the further set of further anomaly detection algorithms **301**. Further, the supervised advice **103** may comprise one or more second weights associated with the one or more of the further set of further anomaly detection algorithms **301**.

Further, the second apparatus **300** may be configured to assign each of the one or more second weights with a value based on different criteria. In particular, one of the criteria may be the confidence of a corresponding anomaly detection algorithm. Further, the confidence is related to the performance of the corresponding anomaly detection algorithm under different scenarios. For example, when the supervised advice **103** comprises an IF algorithm, an xStream algorithm, and a LODA algorithm. Their weights may be determined based on a combination of values that maximize an average score of performance of all algorithms. As an example shown in FIG. 7B, 64 router KPI cases may be used as input data, where anomalies contained therein have been identified and verified by professionals. In this example, an ensemble algorithm = 0.77 xStream + 0.23 LODA that may achieve the maximum performance of a mean prAUC = 0.79, which is 6% below the ideal oracle boundary and at least 39% above the best single algorithm. In this case, the second weight for the IF algorithm is 0. It is noted that the 64 router KPI cases may be obtained, for example, by setting up a network compsing a plurality of routers, such as 20 routers. Then, one or more routers in the set may be manually misconfigured or tampered with, in order to simulate an anomalous situation. Router logs such as data throughput, latency, traffic volumn etc. may be collected as the router KPI cases that are used as the input data. Furthermore, the router logs may be collected at different time durations.

It is noted that in the present disclosure, the merging of two or more algorithms may be referred to as merging or assembling outputs of the two or more algorithms. If the two or more algorithms are associated with weights, i.e., first weights and second weights, outputs of the two or more algorithms may be merged or ensembled according to the weights, respectively. If necessary, a normalization of the weights may be performed.

Therefore, the ensemble algorithm in the above example, 0.77 xStream + 0.23 LODA, may be understood that outputs of xStream and outputs of LODA are ensembled according to the weights of 0.77 and 0.23, respectively. The anomalies may be determined based on the ensembled outputs. The same understanding may be applied where algorithms are merged in the present disclosure.

Furthermore, in this example, recommendation algorithms such as collaborative filtering (or its variants), and clustering (or its variants) may be used to recommend the IF algorithm, the xStream algorithm and the LODA algorithm from the pool of candidate anomaly detection algorithms. Alternatively, machine learning-based recommendation algorithms may also be used. It is noted that applications of the recommendation algorithms are not described in detail in the present application, as they may be implemented using the general knowledge of a person skilled in the art.

Alternatively, one of the criteria may be a time consumption of a corresponding anomaly detection algorithm.

Alternatively, one of the criteria may be an average value based on a quantity of the one or more of the further set of further anomaly detection algorithms **301.** That is, each second weight is equal to one divided by the number of the one or more of further anomaly detection algorithms **301** comprised in the supervised advice **103.**

Alternatively, each of the one or more second weights may be a random value with the sum of 1.

In some embodiments, when the supervised advice **103** comprises two or more of the further set of further anomaly detection algorithms **301,** the second apparatus **300** may be configured to merge the two or more further anomaly detection algorithms before sending the supervised advice **103** to the first apparatus **100.** Optionally, the second apparatus **300** may be configured to merge the two or more further anomaly detection algorithms based on associated second weights, respectively. In this way, business secrets that would be revealed in the supervised advice **103** may be concealed from the first apparatus **100.**

For example, the second apparatus **300** may be a server of a service provider that is specialized in anomaly detection. The first apparatus **100** may belong to a customer to the service provider. This service provider may have extensive knowledge and rich experience, i.e., the historical data **302,** in anomaly detection in various situations. Therefore, the second apparatus **300** may benefit from the extensive knowledge and rich experience for supporting the first apparatus **100** in anomaly detection by performing the supervised recommendation. For the benefit of the service provider, the second apparatus **300** may be able to keep business secrets confidential to the first apparatus **100** while providing satisfactory advice.

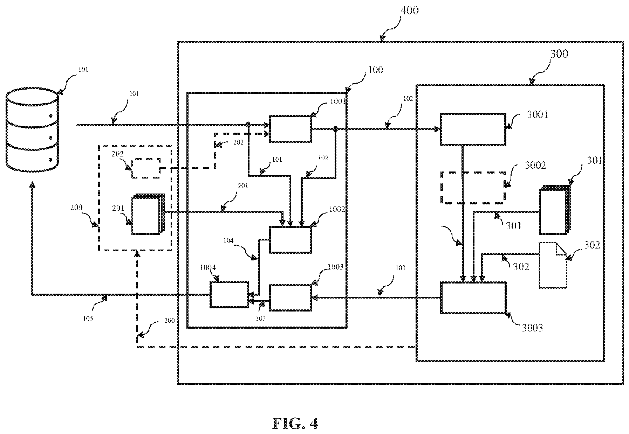

FIG. 4 shows a system **400** for anomaly detection according to an embodiment of the invention.

As shown in FIG. 4, the system **400** comprises the first apparatus **100** and the second apparatus **300.**

The above description with respect to the system **400** according to the third aspect and its implementation forms is correspondingly valid for the system **400** of FIG. 4.

In FIG. 1-4, elements with the same reference signs share the same features and functions likewise.

In the system **400,** for merging the unsupervised advice **104** with the supervised advice **103,** the first apparatus **100** may be configured to merge these two kinds of advices based on one of the following merging rules.

A first rule may be to adopt a dominant algorithm. That is, the first apparatus **100** may be configured to adopt an anomaly detection algorithm in both the unsupervised advice **104** and the supervised advice **103** with the largest weight. In this way, a most reliable anomaly detection algorithm may be achieved as the final anomaly detection algorithm **105** for application.

A second rule may be to adopt the first algorithm received. That is, the first apparatus **100** may be configured to adopt an anomaly detection algorithm that is the first to be returned locally (i.e., through unsupervised recommendation) or remotely (i.e., through supervised recommendation). In this way, a fast and robust anomaly detection algorithm may be achieved as the final anomaly **105** detection algorithm for application.

A third rule may be to adopt a random algorithm. That is, the first apparatus **100** may be configured to randomly choose one anomaly detection algorithm from the supervised advice **103** and the unsupervised advice **104.** In this way, an unbiased but suboptimal anomaly detection algorithm may be achieved as the final anomaly detection algorithm **105** for application.

A fourth rule may be to adopt an averaged algorithm. That is, the first apparatus **100** may be configured to, regardless of any first weight or second weight, adopt all the anomaly detection algorithms comprised in the unsupervised advice **104** and the supervised advice **103** in an average manner as the final anomaly detection algorithm **105.** In this way, the final anomaly detection algorithm **105** may enjoy the benefit of wisdom of the crowd and may be relatively robust.

A fifth possible rule may be to adopt a linear weighted average of all the anomaly detection algorithms comprised in the unsupervised advice **104** and the supervised advice **103**. In this embodiment, a tunable parameter may be a scaled value representing the confidence of the supervised advice **103** versus confidence of the supervised advice **103** may be used. For example, when the second apparatus **300** finds the statistical information **102** has a great similarity with respect to the historical data **302,** then the tunable parameter may be set relatively high. As another example, the tunable parameter may be determined by the first apparatus **100** according to hardware capabilities of the first apparatus. The final anomaly detection algorithm **105** in this embodiment may be represented as:

$$E_{final} = w \cdot E_{supervised} + (1 - w) \cdot E_{unsupervised}$$

in which $E_{final}$ is the final anomaly detection algorithm **105**, $E_{supervised}$ is the anomaly detection algorithm (or merged further anomaly algorithm if there are more than one anomaly detection algorithm) in the supervised advice **103,** $E_{unsupervised}$ is the further anomaly detection algorithm (or merged further anomaly detection algorithm if there is more than one further anomaly detection algorithm) in the unsupervised advice **104,** and w is the tunable parameter.

It is noted that the above-mentioned features described with respect to FIG. 4 may also be applied to the first apparatus **100** of FIG. 2 and the second apparatus **300** of FIG. 3 where applicable.

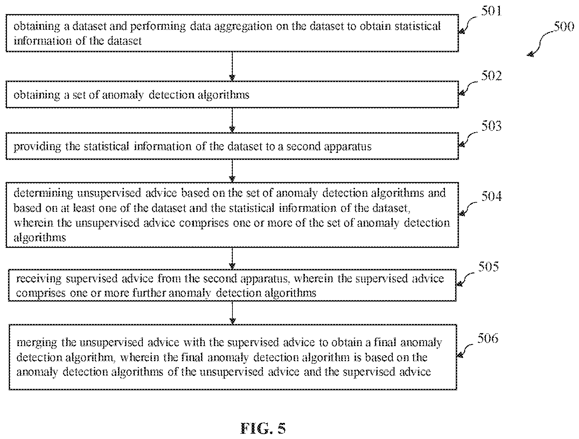

FIG. 5 shows a diagram of a method **500** according to an embodiment of the invention. The method **500** is performed by a first apparatus **100** for anomaly detection in a network and comprises the following steps:

- step **501**: obtaining a dataset **101** and performing data aggregation on the dataset **101** to obtain statistical information **102** of the dataset **101;**
- step **502**: obtaining a set of anomaly detection algorithms **201;**
- step **503**: providing the statistical information **102** of the dataset **101** to a second apparatus **300;**
- step **504**: determining unsupervised advice **104** based on the set of anomaly detection algorithms **201** and based on at least one of the dataset **101** and the statistical information **102** of the dataset **101,** wherein the unsupervised advice **104** comprises one or more of the set of anomaly detection algorithms **201;**
- step **505**: receiving supervised advice **103** from the second apparatus **300,** wherein the supervised advice **103** comprises one or more further anomaly detection algorithms, and
- step **506**: merging the unsupervised advice **104** with the supervised advice **103** to obtain a final anomaly detection algorithm **105**, wherein the final anomaly detection algorithm **105** is based on the anomaly detection algorithms of the unsupervised advice **104** and the supervised advice **103.**

It is noted that the steps of the method **500** may share the same functions and details from the perspective of FIG. 2-4 described above. Therefore, the corresponding method implementations are not described again at this point.

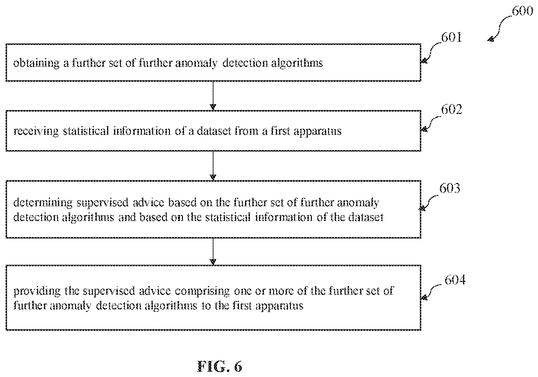

FIG. 6 shows a diagram of a method **600** according to an embodiment of the invention. The method **600** is performed by a second apparatus **300** for supporting anomaly detection in a network and comprises the following steps:

- step **601**: obtaining a further set of further anomaly detection algorithms **301;**
- step **602**: receiving statistical information **102** of a dataset **101** from a first apparatus **100;**
- step **603**: determining supervised advice **103** based on the further set of further anomaly detection algorithms **301** and based on the statistical information **102** of the dataset **101;** and
- step **604**: providing the supervised advice **103** comprising one or more of the further set of further anomaly detection algorithms **301** to the first apparatus **100.**

It is noted that the steps of the method **600** may share the same functions and details from the perspective of FIG. 2-4 described above. Therefore, the corresponding method implementations are not described again at this point.

The first apparatus **100** and the second apparatus **300** in the present disclosure may comprise processing circuitry (not shown) configured to perform, conduct or initiate the various operations of the first apparatus **100** and the second apparatus **300** described herein, respectively. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multipurpose processors. In one embodiment, the processing circuitry comprises one or more processors and a non-transitory memory connected to the one or more processors. The non-transitory memory may carry executable program code which, when executed by the one or more processors, causes the first apparatus **100** and the second apparatus **300** to perform, conduct or initiate the operations or methods described herein, respectively.

In some embodiments, each of the first apparatus **100** and the second apparatus **300** may be an electronic device capable of computing, such as a computer, a server blade, a computer cluster, a virtual machine based on computer architectures, a tablet, a mobile terminal, a graphics processing unit, a video game console, and the like.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. A first apparatus (100) for anomaly detection in a network, the first apparatus (100) configured to:

   obtain a dataset (101) and perform data aggregation on the dataset (101) to obtain statistical information (102) of the dataset (101);
   obtain a set of anomaly detection algorithms (201);
   provide the statistical information (102) of the dataset (101) to a second apparatus (300);
   determine unsupervised advice (104) based on the set of anomaly detection algorithms (201) and based on at least one of the dataset (101) and the statistical information (102) of the dataset (101), wherein the unsupervised advice (104) comprises one or more of the set of anomaly detection algorithms (201);
   receive supervised advice (103) from the second apparatus (300), wherein the supervised advice (103) comprises one or more further anomaly detection algorithms, and
   merge the unsupervised advice (104) with the supervised advice (103) to obtain a final anomaly detection algorithm (105), wherein the final anomaly detection algorithm (105) is based on the anomaly detection algorithms of the unsupervised advice (104) and the supervised advice (103).

2. The first apparatus (100) according to claim 1, wherein the dataset (101) comprises a set of key performance indicators, KPIs, of the network, and the statistical information (102) of the dataset (101) comprises at least one of a mean value, a standard deviation, a skewness, and a kurtosis associated with each of the KPIs.

3. The first apparatus (100) according to claim 1 or 2, wherein for providing the statistical information (102) of the dataset (101) to the second apparatus (300), the first apparatus (100) is configured to jitter the statistical information (102) of the dataset (101) by adding noise.

4. The first apparatus (100) according to one of the claims 1 to 3, wherein for determining the unsupervised advice (104), the first apparatus (100) is configured to apply each of the set of anomaly detection algorithm to exploit intrinsic properties of at least one of the dataset (101) and the statistical information (102) of the dataset (101).

5. The first apparatus (100) according to one of the claims 1 to 4, wherein the unsupervised advice (104) further comprises one or more first algorithm configurations, wherein the one or more first algorithm configurations are associated with the one or more of the set of anomaly detection algorithms (201); and
   the supervised advice (103) further comprises one or more second algorithm configurations, wherein the one or more second algorithm configurations are associated with the one or more further anomaly detection algorithms

6. The first apparatus (100) according to one of the claims 1 to 5, wherein the unsupervised advice (104) further comprises one or more first weights, wherein the one or more first weights are associated with the one or more of the set of anomaly detection algorithms (201); and
   the supervised advice (103) further comprises one or more second weights, wherein the one or more second weights are associated with the one or more further anomaly detection algorithms

7. The first apparatus (100) according to claim 6, further configured to:

   assign each first weight with a value based on a confidence of each anomaly detection algorithm (201) comprised in the unsupervised advice (104); or
   assign each first weight with a randomized value; or
   assign each first weight with a value based on time consumption of each anomaly detection algorithm (201) comprised in the unsupervised advice (104); or

assign each first weight with an average value based on a quantity of the one or more anomaly detection algorithms (201) comprised in the unsupervised advice (104).

8.  The first apparatus (100) according to claim 7, wherein for merging the unsupervised advice (104) with the supervised advice (103), the first apparatus (100) is configured to:
    merge the one or more of the set of anomaly detection algorithms (201) with the one or more further anomaly detection algorithms based on the one or more first weights and the one or more second weights, respectively, to obtain the final anomaly detection algorithm (105).

9.  A second apparatus (300) for supporting anomaly detection in a network, the second apparatus (300) configured to:

    obtain a further set of further anomaly detection algorithms (301);
    receive statistical information (102) of a dataset (101) from a first apparatus (100);
    determine supervised advice (103) based on the further set of further anomaly detection algorithms (301) and based on the statistical information (102) of the dataset (101); and
    provide the supervised advice (103) comprising one or more of the further set of further anomaly detection algorithms (301) to the first apparatus (100).

10. The second apparatus (300) according to claim 9, configured to determine the supervised advice (103) further based on historical data regarding one or more anomalies in the network.

11. The second apparatus (300) according to claim 9 or 10, wherein before determining the supervised advice (103), the second apparatus (300) is further configured to pre-process the statistical information (102) of the dataset (101).

12. A system (400) for anomaly detection in a network, the system (400) comprising a first apparatus (100) according to one of the claims 1 to 8, and a second apparatus (300) according to one of the claims 9 to 11;

    wherein the supervised advice (103) comprises two or more of the further set of further anomaly detection algorithms (301) and two or more second weights;
    the second apparatus (300) is configured to merge the two or more further anomaly detection algorithms of the further set based on the two or more second weights, to obtain a merged further anomaly detection algorithm and a merged second weight; and
    for merging the unsupervised advice (104) with the supervised advice (103), the first apparatus (100) is configured to:
    merge the one or more of the set of anomaly detection algorithms (201) and the merged further anomaly detection algorithm based on the one or more first weights and the merged second weight, respectively, to obtain the final anomaly detection algorithm (105).

13. A method (500) performed by a first apparatus (100) for anomaly detection in a network, the method (500) comprising:

    obtaining (501) a dataset (101) and performing data aggregation on the dataset (101) to obtain statistical information (102) of the dataset (101);
    obtaining (502) a set of anomaly detection algorithms (201);
    providing (503) the statistical information (102) of the dataset (101) to a second apparatus (300);
    determining (504) unsupervised advice (104) based on the set of anomaly detection algorithms (201) and based on at least one of the dataset (101) and the statistical information (102) of the dataset (101), wherein the unsupervised advice (104) comprises one or more of the set of anomaly detection algorithms (201); receiving (505) supervised advice (103) from the second apparatus (300), wherein the supervised advice (103) comprises one or more further anomaly detection algorithms, and
    merging (506) the unsupervised advice (104) with the supervised advice (103) to obtain a final anomaly detection algorithm (105), wherein the final anomaly detection algorithm (105) is based on the anomaly detection algorithms (201) of the unsupervised advice (104) and the supervised advice (103).

14. A method (600) performed by a second apparatus (300) for supporting anomaly detection in a network, the method (600) comprising:

    obtaining (601) a further set of further anomaly detection algorithms (301);
    receiving (602) statistical information (102) of a dataset (101) from a first apparatus (100);

determining (603) supervised advice (103) based on the further set of further anomaly detection algorithms (301) and based on the statistical information (102) of the dataset (101); and
providing (604) the supervised advice (103) comprising one or more of the further set of further anomaly detection algorithms (301) to the first apparatus (100).

15. A computer program comprising a program code for performing the method according to claim 13 or 14, when executed on a computer

**Patentansprüche**

1. Erste Vorrichtung (100) zur Anomalieerkennung in einem Netzwerk, wobei die erste Vorrichtung (100) konfiguriert ist zum:

   Erhalten eines Datensatzes (101) und Durchführen einer Datenaggregation an dem Datensatz (101), um statistische Informationen (102) des Datensatzes (101) zu erhalten;
   Erhalten eines Satzes von Anomalieerkennungsalgorithmen (201);
   Bereitstellen der statistischen Informationen (102) des Datensatzes (101) an eine zweite Vorrichtung (300);
   Bestimmen eines unüberwachten Hinweises (104) basierend auf dem Satz von Anomalieerkennungsalgorithmen (201) und basierend auf mindestens einem von dem Datensatz (101) und den statistischen Informationen (102) des Datensatzes (101), wobei der unüberwachte Hinweis (104) einen oder mehrere von dem Satz von Anomalieerkennungsalgorithmen (201) umfasst;
   Empfangen eines überwachten Hinweises (103) von der zweiten Vorrichtung (300), wobei der überwachte Hinweis (103) einen oder mehrere weitere Anomalieerkennungsalgorithmen umfasst und Zusammenführen des unüberwachten Hinweises (104) mit dem überwachten Hinweis (103), um einen endgültigen Anomalieerkennungsalgorithmus (105) zu erhalten, wobei der endgültige Anomalieerkennungsalgorithmus (105) auf den Anomalieerkennungsalgorithmen des unüberwachten Hinweises (104) und des überwachten Hinweises (103) basiert.

2. Erste Vorrichtung (100) nach Anspruch 1, wobei der Datensatz (101) einen Satz von Leistungskennzahlen, KPIs, des Netzwerks umfasst und die statistischen Informationen (102) des Datensatzes (101) mindestens eines von einem Mittelwert, einer Standardabweichung, einer Schiefe und einer Kurtosis, der/die jedem der KPIs zugeordnet ist, umfassen.

3. Erste Vorrichtung (100) nach Anspruch 1 oder 2, wobei zum Bereitstellen der statistischen Informationen (102) des Datensatzes (101) an die zweite Vorrichtung (300) die erste Vorrichtung (100) konfiguriert ist, um die statistischen Informationen (102) des Datensatzes (101) durch Hinzufügen von statistischem Rauschen zu jittern.

4. Erste Vorrichtung (100) nach einem der Ansprüche 1 bis 3, wobei zum Bestimmen des unüberwachten Hinweises (104) die erste Vorrichtung (100) konfiguriert ist, um jeden des Satzes von Anomalieerkennungsalgorithmen anzuwenden, um intrinsische Eigenschaften von mindestens einem von dem Datensatz (101) und den statistischen Informationen (102) des Datensatzes (101) zu nutzen.

5. Erste Vorrichtung (100) nach einem der Ansprüche 1 bis 4, wobei der unüberwachte Hinweis (104) ferner eine oder mehrere erste Algorithmuskonfigurationen umfasst, wobei die eine oder die mehreren ersten Algorithmuskonfigurationen dem einen oder den mehreren des Satzes von Anomalieerkennungsalgorithmen (201) zugeordnet sind; und
   der überwachte Hinweis (103) ferner eine oder mehrere zweite Algorithmuskonfigurationen umfasst, wobei die eine oder die mehreren zweiten Algorithmuskonfigurationen dem einen oder den mehreren weiteren Anomalieerkennungsalgorithmen zugeordnet sind.

6. Erste Vorrichtung (100) nach einem der Ansprüche 1 bis 5, wobei der unüberwachte Hinweis (104) ferner eine oder mehrere erste Gewichtungen umfasst, wobei die eine oder die mehreren ersten Gewichtungen dem einen oder den mehreren des Satzes von Anomalieerkennungsalgorithmen (201) zugeordnet sind; und
   der überwachte Hinweis (103) ferner eine oder mehrere zweite Gewichtungen umfasst, wobei die eine oder die mehreren zweiten Gewichtungen dem einen oder den mehreren weiteren Anomalieerkennungsalgorithmen zugeordnet sind.

7. Erste Vorrichtung (100) nach Anspruch 6, die ferner konfiguriert ist zum:

Zuweisen eines Werts für jede erste Gewichtung, basierend auf einem Vertrauen jedes Anomalieerkennungsalgorithmus (201), der in dem unüberwachten Hinweis (104) enthalten ist; oder

Zuweisen eines randomisierten Werts für jede erste Gewichtung; oder

Zuweisen eines Werts für jede erste Gewichtung, basierend auf einem Zeitaufwand jedes Anomalieerkennungsalgorithmus (201), der in dem unüberwachten Hinweis (104) enthalten ist; oder

Zuweisen eines Durchschnittswerts für jede erste Gewichtung basierend auf einer Anzahl des einen oder der mehreren Anomalieerkennungsalgorithmen (201), die in dem unüberwachten Hinweis (104) enthalten sind.

8. Erste Vorrichtung (100) nach Anspruch 7, wobei zum Zusammenführen des unüberwachten Hinweises (104) mit dem überwachten Hinweis (103) die erste Vorrichtung (100) konfiguriert ist zum:
Zusammenführen des einen oder der mehreren des Satzes von Anomalieerkennungsalgorithmen (201) mit dem einen oder den mehreren weiteren Anomalieerkennungsalgorithmen basierend auf der einen oder den mehreren ersten Gewichtungen beziehungsweise der einen oder den mehreren zweiten Gewichtungen, um den endgültigen Anomalieerkennungsalgorithmus (105) zu erhalten.

9. Zweite Vorrichtung (300) zum Unterstützen der Anomalieerkennung in einem Netzwerk, wobei die zweite Vorrichtung (300) konfiguriert ist zum:

Erhalten eines weiteren Satzes von weiteren Anomalieerkennungsalgorithmen (301);
Empfangen statistischer Informationen (102) eines Datensatzes (101) von einer ersten Vorrichtung (100);
Bestimmen des überwachten Hinweises (103) basierend auf dem weiteren Satz von weiteren Anomalieerkennnungsalgorithmen (301) und basierend auf den statistischen Informationen (102) des Datensatzes (101); und
Bereitstellen des überwachten Hinweises (103), der einen oder mehrere des weiteren Satzes von weiteren Anomalieerkennnungsalgorithmen (301) umfasst, an die erste Vorrichtung (100).

10. Zweite Vorrichtung (300) nach Anspruch 9, die konfiguriert ist, um den überwachten Hinweis (103) ferner basierend auf historischen Daten bezüglich einer oder mehrerer Anomalien in dem Netzwerk zu bestimmen.

11. Zweite Vorrichtung (300) nach Anspruch 9 oder 10, wobei vor dem Bestimmen des überwachten Hinweises (103) die zweite Vorrichtung (300) ferner konfiguriert ist, um die statistischen Informationen (102) des Datensatzes (101) vorzuverarbeiten.

12. System (400) zur Anomalieerkennung in einem Netzwerk, wobei das System (400) eine erste Vorrichtung (100) nach einem der Ansprüche 1 bis 8 und eine zweite Vorrichtung (300) nach einem der Ansprüche 9 bis 11 umfasst;

wobei der überwachte Hinweis (103) zwei oder mehr des weiteren Satzes von weiteren Anomalieerkennungsalgorithmen (301) und zwei oder mehr zweite Gewichtungen umfasst;
wobei die zweite Vorrichtung (300) konfiguriert ist, um die zwei oder mehr weiteren Anomalieerkennungsalgorithmen des weiteren Satzes basierend auf den zwei oder mehr zweiten Gewichtungen zusammenzuführen, um einen zusammengeführten weiteren Anomalieerkennungsalgorithmus und eine zusammengeführte zweite Gewichtung zu erhalten; und
wobei zum Zusammenführen des unüberwachten Hinweises (104) mit dem überwachten Hinweis (103) die erste Vorrichtung (100) konfiguriert ist zum: Zusammenführen des einen oder der mehreren des Satzes von Anomalieerkennungsalgorithmen (201) und des zusammengeführten weiteren Anomalieerkennungsalgorithmus basierend auf der einen oder den mehreren ersten Gewichtungen beziehungsweise der zusammengeführten zweiten Gewichtung, um den endgültigen Anomalieerkennungsalgorithmus (105) zu erhalten.

13. Verfahren (500), das durch eine erste Vorrichtung (100) zur Anomalieerkennung in einem Netzwerk durchgeführt wird, wobei das Verfahren (500) umfasst:

Erhalten (501) eines Datensatzes (101) und Durchführen der Datenaggregation an dem Datensatz (101), um statistische Informationen (102) des Datensatzes (101) zu erhalten;
Erhalten (502) eines Satzes von Anomalieerkennungsalgorithmen (201);
Bereitstellen (503) der statistischen Informationen (102) des Datensatzes (101) an eine zweite Vorrichtung (300);
Bestimmen (504) des unüberwachten Hinweises (104) basierend auf dem Satz von Anomalieerkennungsalgorithmen (201) und basierend auf mindestens einem von dem Datensatz (101) und den statistischen Informationen (102) des Datensatzes (101), wobei der unüberwachte Hinweis (104) einen oder mehrere von dem Satz von Anomalieerkennungsalgorithmen (201) umfasst;

Empfangen (505) des überwachten Hinweises (103) von der zweiten Vorrichtung (300), wobei der überwachte Hinweis (103) einen oder mehrere weitere Anomalieerkennungsalgorithmen umfasst und

Zusammenführen (506) des unüberwachten Hinweises (104) mit dem überwachten Hinweis (103), um einen endgültigen Anomalieerkennungsalgorithmus (105) zu erhalten, wobei der endgültige Anomalieerkennungsalgorithmus (105) auf den Anomalieerkennungsalgorithmen (201) des unüberwachten Hinweises (104) und des überwachten Hinweises (103) basiert.

14. Verfahren (600), das durch eine zweite Vorrichtung (300) zum Unterstützen der Anomalieerkennung in einem Netzwerk durchgeführt wird, wobei das Verfahren (600) umfasst:

Erhalten (601) eines weiteren Satzes von weiteren Anomalieerkennungsalgorithmen (301);
Empfangen (602) statistischer Informationen (102) eines Datensatzes (101) von einer ersten Vorrichtung (100);
Bestimmen (603) des überwachten Hinweises (103) basierend auf dem weiteren Satz von weiteren Anomalieerkennungsalgorithmen (301) und basierend auf den statistischen Informationen (102) des Datensatzes (101); und
Bereitstellen (604) des überwachten Hinweises (103), der einen oder mehrere des weiteren Satzes von weiteren Anomalieerkennungsalgorithmen (301) an die erste Vorrichtung (100) umfasst.

15. Computerprogramm, das einen Programmcode zum Durchführen des Verfahrens nach Anspruch 13 oder 14 umfasst, wenn es auf einem Computer ausgeführt wird.


## Revendications

1. Premier appareil (100) de détection d'anomalie dans un réseau, le premier appareil (100) étant configuré pour :

obtenir un ensemble de données (101) et réaliser une agrégation de données sur l'ensemble de données (101) pour obtenir des informations statistiques (102) de l'ensemble de données (101) ;
obtenir un ensemble d'algorithmes de détection d'anomalie (201) ;
fournir les informations statistiques (102) de l'ensemble de données (101) à un second appareil (300) ;
déterminer une recommandation non supervisée (104) sur la base de l'ensemble d'algorithmes de détection d'anomalie (201) et sur la base d'au moins l'un parmi l'ensemble de données (101) et les informations statistiques (102) de l'ensemble de données (101), dans lequel la recommandation non supervisée (104) comprend un ou plusieurs de l'ensemble d'algorithmes de détection d'anomalie (201) ;
recevoir une recommandation supervisée (103) à partir du second appareil (300), dans lequel la recommandation supervisée (103) comprend un ou plusieurs algorithmes de détection d'anomalie supplémentaires, et
fusionner la recommandation non supervisée (104) avec la recommandation supervisée (103) pour obtenir un algorithme de détection d'anomalie final (105), dans lequel l'algorithme de détection d'anomalie final (105) est basé sur les algorithmes de détection d'anomalie de la recommandation non supervisée (104) et de la recommandation supervisée (103).

2. Premier appareil (100) selon la revendication 1, dans lequel l'ensemble de données (101) comprend un ensemble d'indicateurs clé de performance, KPI, du réseau, et les informations statistiques (102) de l'ensemble de données (101) comprennent au moins l'un parmi une valeur moyenne, un écart type, une asymétrie et un aplatissement associé à chacun des KPI.

3. Premier appareil (100) selon la revendication 1 ou 2, dans lequel pour fournir les informations statistiques (102) de l'ensemble de données (101) au second appareil (300), le premier appareil (100) est configuré pour soumettre des informations statistiques (102) de l'ensemble de données (101) à une gigue en ajoutant du bruit.

4. Premier appareil (100) selon l'une des revendications 1 à 3, dans lequel pour déterminer la recommandation non supervisée (104), le premier appareil (100) est configuré pour appliquer chacun de l'ensemble d'algorithmes de détection d'anomalie pour exploiter des propriétés intrinsèques d'au moins l'un parmi l'ensemble de données (101) et les informations statistiques (102) de l'ensemble de données (101).

5. Premier appareil (100) selon l'une des revendications 1 à 4, dans lequel la recommandation non supervisée (104) comprend en outre une ou plusieurs premières configurations d'algorithme, dans lequel la ou les premières configurations d'algorithme sont associées à l'un ou plusieurs de l'ensemble d'algorithmes de détection d'anomalie (201) ; et
la recommandation supervisée (103) comprend en outre une ou plusieurs secondes configurations d'algorithme, dans lequel la ou les secondes configurations d'algorithme sont associées au ou aux algorithmes de détection d'anomalie supplémentaires.

6. Premier appareil (100) selon l'une des revendications 1 à 5, dans lequel la recommandation non supervisée (104) comprend en outre un ou plusieurs premiers poids, dans lequel le ou les premiers poids sont associés à l'un ou plusieurs de l'ensemble d'algorithmes de détection d'anomalie (201) ; et
la recommandation supervisée (103) comprend en outre un ou plusieurs seconds poids, dans lequel le ou les seconds poids sont associés au ou aux algorithmes de détection d'anomalie supplémentaires.

7. Premier appareil (100) selon la revendication 6, configuré en outre pour :

   attribuer chaque premier poids à une valeur basée sur une confiance de chaque algorithme de détection d'anomalie (201) compris dans la recommandation non supervisée (104) ; ou
   attribuer chaque premier poids à une valeur aléatoire ; ou
   attribuer chaque premier poids à une valeur sur la base de la consommation temporelle de chaque algorithme de détection d'anomalie (201) compris dans la recommandation non supervisée (104) ; ou
   attribuer chaque premier poids à une valeur moyenne sur la base d'une quantité du ou des algorithmes de détection d'anomalie (201) compris dans la recommandation non supervisée (104).

8. Premier appareil (100) selon la revendication 7, dans lequel pour fusionner la recommandation non supervisée (104) avec la recommandation supervisée (103), le premier appareil (100) est configuré pour :
   fusionner le ou les de l'ensemble d'algorithmes de détection d'anomalie (201) avec le ou les algorithmes de détection d'anomalie supplémentaires sur la base du ou des premiers poids et du ou des seconds poids, respectivement, pour obtenir l'algorithme de détection d'anomalie final (105).

9. Second appareil (300) de prise en charge d'une détection d'anomalie dans un réseau, le second appareil (300) étant configuré pour :

   obtenir un ensemble supplémentaire d'algorithmes de détection d'anomalie supplémentaires (301) ;
   recevoir des informations statistiques (102) d'un ensemble de données (101) à partir d'un premier appareil (100) ;
   déterminer une recommandation supervisée (103) sur la base de l'ensemble supplémentaire d'algorithmes de détection d'anomalie supplémentaires (301) et sur la base des informations statistiques (102) de l'ensemble de données (101) ; et
   fournir la recommandation supervisée (103) comprenant un ou plusieurs de l'ensemble supplémentaire d'algorithmes de détection d'anomalie supplémentaires (301) au premier appareil (100).

10. Second appareil (300) selon la revendication 9, configuré pour déterminer la recommandation supervisée (103) en outre sur la base de données historiques concernant une ou plusieurs anomalies dans le réseau.

11. Second appareil (300) selon la revendication 9 ou 10, dans lequel avant la détermination de la recommandation supervisée (103), le second appareil (300) est configuré en outre pour prétraiter les informations statistiques (102) de l'ensemble de données (101).

12. Système (400) de détection d'anomalie dans un réseau, le système (400) comprenant un premier appareil (100) selon l'une des revendications 1 à 8, et un second appareil (300) selon l'une des revendications 9 à 11 ;

    dans lequel la recommandation supervisée (103) comprend au moins deux parmi l'ensemble supplémentaire d'algorithmes de détection d'anomalie supplémentaires (301) et au moins deux seconds poids ;
    le second appareil (300) est configuré pour fusionner les au moins deux algorithmes de détection d'anomalie supplémentaires de l'ensemble supplémentaire sur la base des au moins deux seconds poids, pour obtenir un algorithme de détection d'anomalie supplémentaire fusionné et un second poids fusionné ; et
    pour fusionner la recommandation non supervisée (104) avec la recommandation supervisée (103), le premier appareil (100) est configuré pour :
    fusionner le ou les de l'ensemble d'algorithmes de détection d'anomalie (201) et l'algorithme de détection d'anomalie supplémentaire fusionné sur la base du ou des premiers poids et du second poids fusionné, respectivement, pour obtenir l'algorithme de détection d'anomalie final (105).

**13.** Procédé (500) réalisé par un premier appareil (100) de détection d'anomalie dans un réseau, le procédé (500) comprenant :

l'obtention (501) d'un ensemble de données (101) et la réalisation d'une agrégation de données sur l'ensemble de données (101) pour obtenir des informations statistiques (102) de l'ensemble de données (101) ;

l'obtention (502) d'un ensemble d'algorithmes de détection d'anomalie (201) ;

la fourniture (503) des informations statistiques (102) de l'ensemble de données (101) à un second appareil (300) ;

la détermination (504) d'une recommandation non supervisée (104) sur la base de l'ensemble d'algorithmes de détection d'anomalie (201) et sur la base d'au moins l'un parmi l'ensemble de données (101) et les informations statistiques (102) de l'ensemble de données (101), dans lequel la recommandation non supervisée (104) comprend un ou plusieurs de l'ensemble d'algorithmes de détection d'anomalie (201) ;

la réception (505) de la recommandation supervisée (103) à partir du second appareil (300), dans lequel la recommandation supervisée (103) comprend un ou plusieurs algorithmes de détection d'anomalie supplémentaires, et

la fusion (506) de la recommandation non supervisée (104) avec la recommandation supervisée (103) pour obtenir un algorithme de détection d'anomalie final (105), dans lequel l'algorithme de détection d'anomalie final (105) est basé sur les algorithmes de détection d'anomalie (201) de la recommandation non supervisée (104) et de la recommandation supervisée (103).

**14.** Procédé (600) réalisé par un second appareil (300) de prise en charge d'une détection d'anomalie dans un réseau, le procédé (600) comprenant :

l'obtention (601) d'un ensemble supplémentaire d'algorithmes de détection d'anomalie supplémentaires (301) ;

la réception (602) d'informations statistiques (102) d'un ensemble de données (101) à partir d'un premier appareil (100) ;

la détermination (603) d'une recommandation supervisée (103) sur la base de l'ensemble supplémentaire d'algorithmes de détection d'anomalie supplémentaires (301) et sur la base des informations statistiques (102) de l'ensemble de données (101) ; et

la fourniture (604) de la recommandation supervisée (103) comprenant un ou plusieurs de l'ensemble supplémentaire d'algorithmes de détection d'anomalie supplémentaires (301) au premier appareil (100).

**15.** Programme informatique comprenant un code de programme pour réaliser le procédé selon la revendication 13 ou 14 lorsqu'il est exécuté sur un ordinateur.

Functional network element

Anomaly

FIG. 1

FIG. 2

FIG. 3

FIG. 4

obtaining a dataset and performing data aggregation on the dataset to obtain statistical information of the dataset
501

obtaining a set of anomaly detection algorithms
502

providing the statistical information of the dataset to a second apparatus
503

determining unsupervised advice based on the set of anomaly detection algorithms and based on at least one of the dataset and the statistical information of the dataset, wherein the unsupervised advice comprises one or more of the set of anomaly detection algorithms
504

receiving supervised advice from the second apparatus, wherein the supervised advice comprises one or more further anomaly detection algorithms
505

merging the unsupervised advice with the supervised advice to obtain a final anomaly detection algorithm, wherein the final anomaly detection algorithm is based on the anomaly detection algorithms of the unsupervised advice and the supervised advice
506

500

**FIG. 5**

601
obtaining a further set of further anomaly detection algorithms

602
receiving statistical information of a dataset from a first apparatus

603
determining supervised advice based on the further set of further anomaly detection algorithms and based on the statistical information of the dataset

604
providing the supervised advice comprising one or more of the further set of further anomaly detection algorithms to the first apparatus

600

**FIG. 6**

FIG. 7B

FIG. 7A

**EP 4 118 807 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021004704 A1
- US 2021037037 A1